# EUROPEAN PATENT SPECIFICATION

(11) **EP 1 892 983 B1**
(45) Date of publication and mention of the grant of the patent: **11.08.2010**
(21) Application number: 06119363.7
(22) Date of filing: 23.08.2006
(51) Int. Cl.: H04W 4/22

(54) **Method and system for processing emergency calls on a wireless communication device with a low battery**
Verfahren und System zur Notrufverarbeitung eines drahtlosen Kommunikationsgeräts mit niedriger Batterie
Méthode et système pour traiter des appels d'urgence d'un dispositif de communication sans fil avec une batterie faible

(43) Date of publication of application: 27.02.2008
(73) Proprietor: RESEARCH IN MOTION LIMITED, Waterloo, Ontario N2L 3W8 (CA)
(72) Inventor: Bliss, Nathan, Luton, Bedfordshire LU1 1RW (GB)
(74) Representative: Patel, Binesh

(56) References cited:
- EP-A- 1 361 774
- WO-A-01/30048
- WO-A-01/41458
- WO-A-97/21314
- US-B1- 6 408 172

## Description

The present disclosure relates generally to emergency calls, and more particularly to a method and system for processing emergency calls on a wireless communication device with a low battery.

When a wireless communication device such as a mobile or cellular phone has a low battery event, the device may not have sufficient power to initiate and complete a call. In the case of an emergency, this may mean that an emergency call is not completed and emergency services are not properly notified or dispatched to assist the caller in the emergency situation. Accordingly, there is a need for a solution which allows emergency services to be notified by a caller in the circumstance that there is a low battery posing a risk that the emergency call may be dropped.

US-B-6408172 discloses a system for providing a battery status indicator associated with a calling mobile station during an emergency call. In this system, if the battery level of a mobile calling station becomes low during a call, an SMS message including a low battery indicator may be sent to a public safety answering point.

### GENERAL

A method and system is described that may allow a user to send a Short Message Service (SMS) message to an emergency SMS address when a low battery has been detected on a wireless communication device.

] In accordance with one embodiment, there is preferably provided a method for processing an emergency call on a wireless communication device, the wireless communication device being operatively connected to a subscriber identity module (SIM) card, and a battery for powering the device and having a display screen, the method comprising: receiving an input from a user of the wireless communication device comprising a number to be called; determining if the number to be called is an emergency call code; if the number is an emergency call code, determining if a low battery flag is set on the SIM card; if the low battery flag has not been set on the SIM card, allowing the call; if the low battery flag has been set on the SIM card, disallowing the call and sending a short message service (SMS) message to an emergency SMS address stored on the SIM card.

In accordance with another embodiment, there is preferably provided a wireless communication device having a display screen, input devices for receiving input form a user, and a communication subsystem, the wireless communication device comprising: a subscriber identity module (SIM) card comprising a memory having stored thereon a low battery flag and an emergency SMS address; a processor and a memory, the memory including data and instructions to configure the wireless communication device to: receive an input from a user comprising a number to be called; determine if the number to be called is an emergency call code; if the number is an emergency call code, determine if the low battery flag is set on the SIM card; if the low battery flag has not been set on the SIM card, allow the call; if the low battery flag has been set on the SIM card, disallow the call and sending a short message service (SMS) message to the emergency SMS address stored on the SIM card.

In accordance with a further embodiment, there is preferably provided a subscriber identity module (SIM) card comprising a memory, the memory having stored thereon at least the following: an emergency SMS address accessible by a wireless communication device, a low battery flag accessible or stored within by a SIM application, and a SIM Toolkit or one or more features thereof configured to set a low battery flag in response to receiving a low battery event notification, determine if the number to be called is an emergency call code; if the number is an emergency call code, determine if the low battery flag is set; if the low battery flag has not been set, allow the call; if the low battery flag has been set on the SIM card, disallow the call and sending a short message service (SMS) message to the emergency SMS address. The SIM card may be further configured to instruct the wireless communication device to issue a low battery event when the battery power level is equal to or less than a predetermined low battery threshold, and instruct the wireless communication device to issue a normal battery event when battery power level is greater than the predetermined low battery threshold.

In accordance with further embodiments, there is preferably provided an apparatus such as a messaging server, a method for adapting this server, as well as articles of manufacture such as a pre-recorded storage device or other computer readable medium having program instructions recorded thereon for practising the method of the present disclosure, as well as a computer data signal carrying computer readable program instructions for practising the method of the present disclosure.

These and other aspects and features of the present disclosure will become apparent to persons of ordinary skill in the art upon review of the following detailed description, taken in combination with the appended drawings.

### BRIEF DESCRIPTION OF THE DRAWINGS

FIG. 1 is a block diagram illustrating a wireless device suitable for processing an emergency call in accordance with one embodiment of the present disclosure;

FIG. 2 is a block diagram illustrating a memory of the wireless device of FIG. 1;

FIG. 3 is a front view illustrating the wireless device of FIG. 1;

FIG. 4 is a flowchart illustrating operations for processing a low battery event in accordance with one embodiment of the present disclosure;

FIG. 5 is a flowchart illustrating operations for processing a normal battery event in accordance with one embodiment of the present disclosure;

FIG. 6 is a flowchart illustrating operations for processing an emergency call in accordance with one embodiment of the present disclosure; and

FIG. 7A to 7E illustrate communications between a SIM card and a wireless communication device in accordance with one embodiment of the present disclosure.

It will be noted that throughout the appended drawings, like features are identified by like reference numerals.

### DESCRIPTION OF PREFERRED EMBODIMENTS

The present disclosure provides a subscriber identity module (SIM) card and wireless communication device (such as a mobile phone) configured to send a Short Message Service (SMS) message to an emergency operator via an emergency SMS address when a low battery event has been detected on the wireless device rather than allowing the emergency call to proceed. Advantageously, this solution reduces the risk of the wireless device dropping an emergency call when the battery level is approaching a level at which there is a risk that the wireless device does not have enough power to initiate and complete the call, such as the battery level at which the radio system does not have enough power to transmit and receive and may be preparing to shut down. SMS messages are plain text messages limited in length (currently limited to 160 characters) and require substantially less power to transmit than an average length emergency call. The power required to send an emergency SMS message may be estimated with greater certainty than a phone call, and provides a basis for determining battery level thresholds for use in sending user notifications and modifying the behaviour/functionality of the wireless device in view of the low battery. Because of the lower power consumption, emergency SMS messages provide a means of sending an emergency message when a low battery exists that poses a risk of dropping an emergency call.

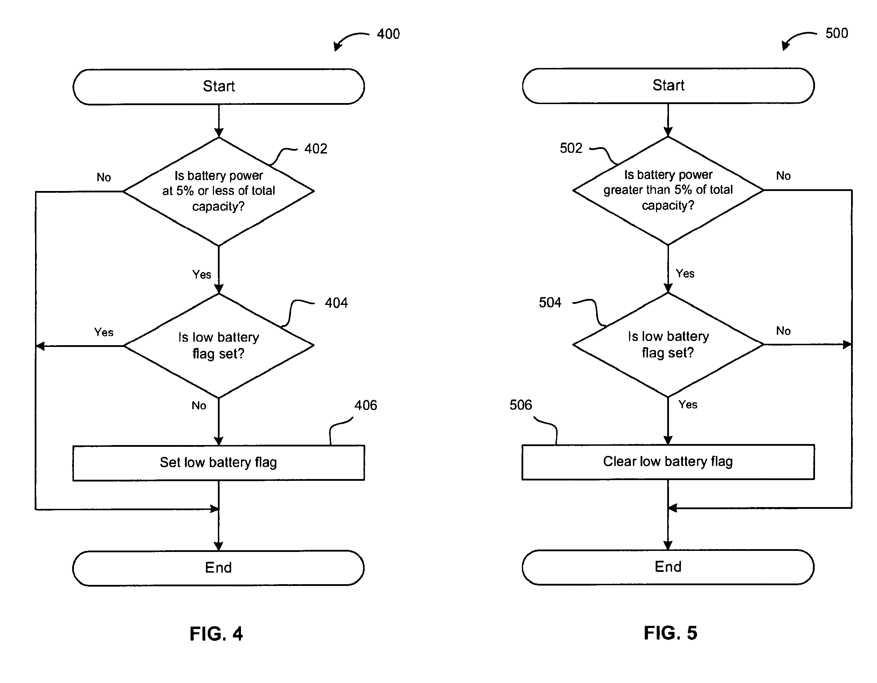

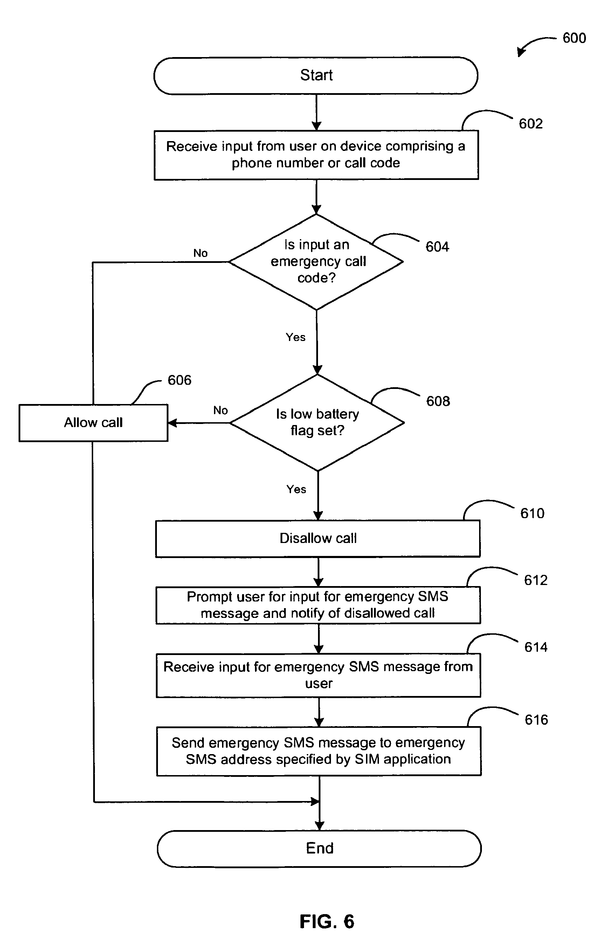

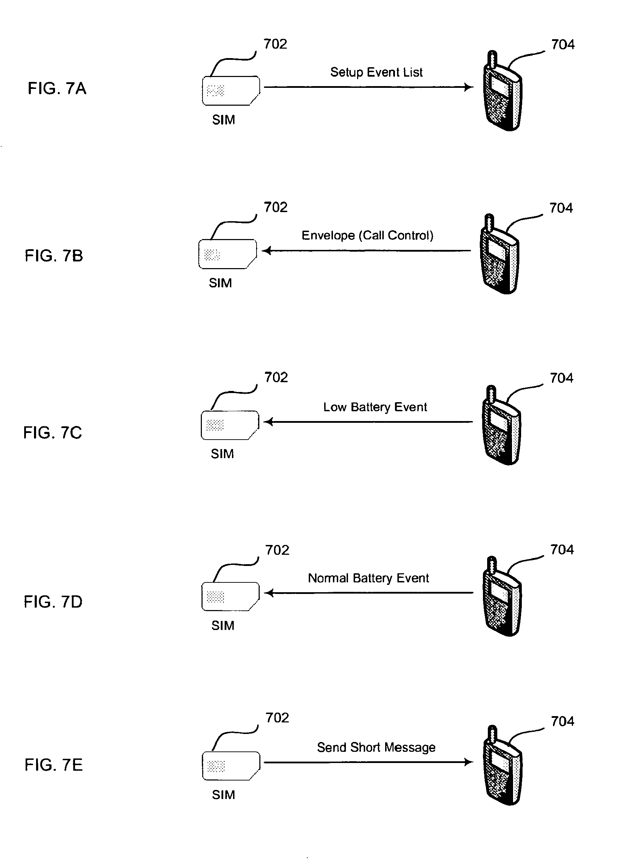

FIG. 7A to 7E illustrate the direction of communications between a SIM card 702 and wireless communication device 704 in accordance with one embodiment of a method and system for processing emergency calls with a low battery provided by the present disclosure. FIG. 4 illustrates operations for implementing a low battery event. FIG. 5 illustrates operations for implementing a normal battery event. FIG. 6 illustrates operations for processing an emergency call with a low battery in accordance with one embodiment of a method and system for processing emergency calls with a low battery.

As will be known to a person of skill in the art, 3GPP TS 11.14 is a standard for Global System for Mobile communications (GSM) networks providing technical specifications of a SIM Application Toolkit (SAT) for the Subscriber Identity Module - Mobile Equipment (SIM-ME) interface. 3GPP TS 31.111 is a standard for Universal Mobile Telephone Systems (UMTS) networks providing technical specifications of a Universal Subscriber Identity Module (USIM) Application Toolkit (USAT) for USIM cards used in UMTS networks. Generally, the 3GPP TS 11.14 & 3GPP TS 31.111 standards provide for an Application Toolkit to be included in the memory of SIM and USIM cards respectively. For convenience, the term SIM card will be used to refer to both SIM and USIM cards in the following description. Similarly, the term SIM Toolkit will be used to refer to the Application Toolkits for both SIM and USIM cards in the following description.

The SIM Toolkit provides a set of operations and commands that extend the functionality of the SIM card 702 by extending the communications protocol between the SIM card 702 and the wireless device 704 itself, and defining how the SIM card 702 interacts with the respective wireless network. The SIM Toolkit allows data stored on the SIM card 702 to be accessed and allows the SIM card 702 and wireless communication device 704 to communicate with each other. The 3GPP TS 11.14 & 3GPP TS 31.111 standards ensure the interoperability between the SIM Toolkit features of the SIM card 702 and the wireless devices of different manufacturers.

The SIM Toolkit also allows the SIM card 702 to be programmed to carry out new functions and applications. SIM applications may be programmed for and stored directly on the SIM card 702. As will be described in more detailed below, the provision of the SIM Toolkit allows the SIM card 702 to take a proactive role rather than being a passive carrier of information as with older generation SIM cards. Using the SIM Toolkit the SIM card 702 may initiate commands independent of the wireless communication device 704. SIM applications also allow wireless communication carriers to program specific applications that modify or enhance the functionality and capabilities provided by the wireless communication network. SIM applications are commonly used in providing value added services (VAS) in the wireless environment. For example, VAS applications may manipulate the menu structure of the wireless communication device 704 to provide new, tailored menu options. For instance, the device 704 could provide a menu for "personal" use and a menu for "business" use. The wireless communication device 704 effectively becomes personalized to the individual subscriber and therefore more user-friendly.

Some SIM Toolkit mechanisms relevant to the method and system for of the application are:

*ENVELOPE (Call Control)* - The *ENVELOPE (Call Control)* command allows the SIM card 702 to check every outgoing call. The entered number is passed to the SIM card 702 for pre-approval. Based on parameters stored on the SIM card 702, the SIM card 702 allows the call, refuses the call, or requests changes of the entered number.

*Proactive SIM -* The *Proactive SIM* mechanism allows the SIM card 702 to send data and instructions to the wireless device 704, for example, *Proactive SIM* commands may be configured to instruct the wireless device 704 to monitor for one or more events in an Event List stored on the SIM card 702.

*Command Result-* The *Command Result* mechanism uses the *TERMINAL RESPONSE* message to allow the wireless communication device 704 to inform the SIM card 702 of the result of a *Proactive SIM* command it has completed.

*ENVELOPE (Event Download)* - The *ENVELOPE (Event Download)* command is used to notify the SIM card 702 when an event being monitored has occurred on the wireless device 704. The SIM card 702 may then perform actions depending on the result (e.g. error handling, etc.).

The SIM card 702 comprises a memory in which emergency call codes, subscriber information, preferences and other information are stored. According to industry standards for GSM and UMTS networks in place at the date of filing the present application emergency call codes (e.g. 911, 999, etc.) are stored on the SIM card 702 in a file entitled "EF_ECC" and also in the wireless communication device 704. The list of emergency call codes stored on the wireless communication device 704 may also include those downloaded over the air from the network operator. The availability of these emergency call codes depends on the presence of the EF_ECC file on the SIM card 702 and the numbers stored within it as set forth the by the 3 GPP TS 22.101 technical specification. As will be appreciated by persons skilled in the art, although the EF_ECC file is common to both GSM and UMTS networks according to the 3 GPP TS 51.011 and GPP TS 31.102 specifications respectively, SIM cards for use in UMTS networks contain additional information the scope of which is not relevant to the present disclosure.

The 3 GPP TS 22.101 specification specifies what the wireless communication device 704 must store should the EF_ECC file be either non-existent or empty. In newer versions of 3 GPP TS 22.101, a list of universal emergency call codes (e.g. "112") are specified for use when the EF_ECC file on the SIM card 702 is empty. Another list is specified in the standard for use when the wireless communication device 704 does not have a SIM card 702 inserted. According to industry standards for GSM and UMTS networks in place at the date of filing the present application, the inclusion of universal emergency codes in the EF_ECC file is optional. Unlike local emergency codes which may vary between countries and regions (for example, "911" is the emergency number commonly used throughout North America, whereas "999" is the emergency number commonly used throughout the UK), the universal emergency codes (e.g. "112") may be used to access local emergency services in all GSM and UMTS wireless networks around the world. Using an universal emergency code, local emergency services may be contacted regardless of the user's current location and regardless of the location of the phone's native wireless carrier.

According to one embodiment of the present disclosure, there is provided a method implemented via a SIM application for processing an emergency call and sending a low battery emergency SMS message, and a system for executing the SIM application. The implementation of this method and system requires the support of both the SIM card 702 and the wireless communication device 704 in which it is received. To achieve this cooperation, the 3GPP TS 11.14 & 3GPP TS 31.111 standards will need to be modified as described in more detail below.

The *ENVELOPE (Call Control)* command must be modified to seek approval for emergency calls as well as non-emergency calls. Under the current standard, the *ENVELOPE (Call Control)* command seeks approval from the SIM card 702 for all calls except emergency calls. This approval process ensures that calls placed on the wireless device 704 comply with parameters stored on the SIM card 702. Subscribers or wireless carriers may set parameters or rules on the SIM card 702 that govern outgoing calls. For example, the parameters or rules may not allow long distances to be placed or may not allow calls to be placed to numbers outside of Canada, etc. Thus, *ENVELOPE (Call Control)* allows for advanced call features to be implemented on the device 704 if desired. However, according to the current standard *ENVELOPE (Call Control)* does not perform a check where the number entered is an emergency number (e.g. 911, 999, 112 etc.). Accordingly, the *ENVELOPE (Call Control)* mechanism must be modified to apply to emergency calls.

The SIM card 702 must be modified to store an SMS address for emergency services. This may be an SMS address for local emergency services stored on the SIM card 702 and/or a universal SMS address. A local emergency SMS address may be specified by the respective wireless carrier or may be an agreed upon standard similar to local emergency phone numbers such as 911, 999, etc. To implement a universal emergency SMS would require a modification of the industry standard to create and store a universal emergency SMS address on the SIM card 702. If a local emergency SMS address is implemented by the wireless carrier, then the wireless carrier may use intelligent networking to identify and contact the appropriate local emergency services to direct the emergency SMS message to. Alternatively, emergency SMS messages may be handled by a centralized service which dispatches or notifies local services as required. The emergency SMS address may also be updatable using Over-The-Air (OTA) SIM Data Download.

The implementation of the method and system of the present disclosure also requires the "Event List" in the *Proactive SIM* command *Set Up Event List* to be modified to include two new events referred to as a *Low Battery Event* and a *Normal Battery Event.* The names of these new events are for convenience only and are not intended to be limiting. The functionality of the new events will be discussed in further detail below.

### Low Battery Event

The low battery event is the first of two new events for the wireless communication device 704 to monitor. Using *Proactive SIM,* the SIM card 702 instructs the wireless device 704 to implement a low battery monitoring function which monitors the power level of the battery of the wireless communication device 704. A low battery event occurs or is triggered when the power level of the battery reaches or falls below a predetermined low battery threshold. Preferably, the low battery event occurs or is triggered when the power level of the battery drops to 5% of the total battery capacity or less. This level is a common trigger used in the industry for displaying low battery messages and so is a convenient threshold for the low battery event. However, it will be appreciated by persons skilled in the art that the value of the low battery threshold may be varied as deemed appropriate or in compliance with industry standards. Upon determining the power level of the battery has fallen to or below the predetermined low battery threshold, the wireless device 704 issues a low battery event which is sent to the SIM card 702 so as to provide notification of the low battery detected on the device 704.

### Normal Battery Event

The normal battery event is the second of two new events for the wireless communication device 704 to monitor. Using *Proactive SIM,* the SIM card 702 instructs the wireless device 704 to implement a normal battery monitoring function which monitors the power level of the battery of the wireless communication device 70 and notifies the SIM card 702 when the battery rises above the predetermined low battery threshold. This may occur, for example when the battery is being charged or when the battery is replaced. The predetermined low battery threshold for both the low and normal battery events is the same, and is preferably 5% of the total battery capacity as noted above. Upon determining the power level of the battery is above the predetermined low battery threshold, the wireless device 704 issues a normal battery event which is sent to the SIM card 702 so as to provide notification of the normal battery level detected on the device 704.

Referring now to FIG. 4, example operations 400 for implementing a low battery event will be described. The wireless device 704 has been instructed by the SIM card 702 via a *Proactive SIM* command to monitor for the battery level reaching or falling below a predetermined low battery threshold, which in this example embodiment has been set at 5% of the total battery capacity. In the first step 402, the wireless device 704 examines the battery level information stored by the device 704 or checks the battery level if such information is not available. If the battery level is not at 5% or less of the total capacity, the battery level is not low and operations 400 end.

If the battery level is at 5% or less of the total capacity, operations proceed to step 404 where the SIM card 702 is notified of the low battery by a low battery event issued by the wireless device 704. The SIM card 702 then examines a low battery flag stored on the card 702 and managed by the SIM application implements the method of the present disclosure, and if the low battery flag is already set the operations 400 end. If the low battery flag is not set, then operations proceed to step 406 where the low battery flag is set on the SIM card 702. Then, the operations 400 end.

Referring now to FIG. 5, operations 500 for implementing a normal battery event will be described. The wireless device 704 has been instructed by the SIM card 702 via a *Proactive SIM* command to monitor for the battery level being above a predetermined low battery threshold, which in this example embodiment has been set at 5% of the total battery capacity. In the first step 502, the wireless device 704 examines the battery level information stored by the device 704 or checks the battery level if such information is not available. If the battery level is not at 5% or more of the total capacity, the battery level is not "normal" and operations 500 end.

If the battery level is at 5% or more of the total capacity, operations proceed to step 504 where the SIM card 702 is notified of the normal battery level by a normal battery event issued by the wireless device 704. The SIM card 702 then examines a low battery flag stored on the card 702, and if the low battery flag is not set, operations 500 end. If the low battery flag is set, then operations proceed to step 506 where the low battery flag is cleared (removed). Then, the operations 500 end.

Referring now to FIG. 6, operations 600 for processing an emergency call in accordance with one embodiment of the present disclosure will now be described. In the first step 602, input from user is received on the wireless device 704 comprising a phone number or call code to be dialled. Next, in step 604 the SIM card 702 checks the number to determine if it is an emergency call code. If the entered number is not an emergency call code, then operations proceed to step 606 where the call is allowed. The operations 600 then end. For simplicity, the operations 600 do not address any features relating to security lockouts or overrides which may disallow the call etc.

If the entered number is an emergency call code, operations proceed to step 608 where the SIM card 702 checks to see if a low battery flag has been set on the card 702. If the low battery flag has not been set, operations proceed to step 606 where the call is allowed. The operations 600 then end.

If the low battery flag has been set, operation proceed to step 610 where the call is disallowed and a SIM toolkit supported emergency SMS application (a SIM application) is launched, In the next step 612, the user is prompted by the emergency SMS application to input data such as text for an emergency SMS message. In the next step 614, the input from the user comprising data (e.g., message text) is received on the wireless device 704. In the next step 616, the wireless device 704 then sends an emergency SMS message comprising the data input from the user to an emergency operator or service via an emergency SMS address specified in memory of the SIM card 702. The operations 600 then end.

FIG. 7A to 7E illustrate the direction of communications between the SIM card 702 and the wireless communication device 704 in accordance with one embodiment of a method and system for processing emergency calls with a low battery. FIG. 7A illustrates the SIM card 702 instructing the wireless device 704 to monitor for a low battery event and normal battery event. This is typically performed using the *Set Up Event List* Proactive SIM command provided by the SIM Toolkit. Preferably, the SIM card 702 instructs the wireless device 704 to monitor for both a low battery event and normal battery event because the low battery flag is on the SIM card 702 and the monitoring of the events is performed on the wireless device 704. However, the *Set Up Event List* command could be modified by the SIM application and re-issued via the SIM Toolkit according to whether the low battery flag has been set on the SIM card 702, in this way the wireless device 704 would only monitor for a normal battery if a low battery event has occurred on the wireless device 704 (as determined by the low battery flag being set).

FIG. 7B illustrates the wireless communication device 704 sending the entered number to the SIM card 702 for approval. This is performed using the *Call Control* command provided by the SIM Toolkit. As discussed above, using the *Call Control* mechanism the SIM card 702 allows the call, refuses the call, or demands changes of the entered number based on rules or parameters stored on the SIM card 702. According to the method and system of the present disclosure, if the entered number is an emergency call code (e.g. 112, 911, 999, etc.), the SIM card 702 checks to see if the low battery flag has been set. If the low battery flag has been set, it instructs the wireless communication device 704 to send an SMS message as described above and below in connection with FIG. 7E.

FIG. 7C illustrates a low battery event. If the current power level in the wireless communication device 704 falls to 5% or less of the total capacity, the device 704 notifies the SIM card 702 of the low battery by issuing a low battery event. The SIM card 702 then sets a low battery flag stored on the SIM card 702. This occurs regardless of what the user is doing on the wireless communication device 704 at the time. Preferably, a low battery notification is also displayed on the display screen of the wireless communication device 704.

FIG. 7D illustrates a normal battery event. If the current power level in the wireless communication device 704 rises above 5% of the total capacity (i.e. during battery charging or following a replacement of the battery), a normal battery event is sent to the SIM card 702 which in turn removes or clears the low battery flag stored on the SIM card 702. A normal low battery notification may also be displayed on the display screen of the wireless communication device 704. Although the battery level rising about the predetermined low battery threshold has been implemented as a single event, it be appreciated by persons of ordinary skill in the art that separate events could be implemented to cover a battery charging event and new (replacement) battery event instead of the normal battery event. Such a battery charging event may allow the emergency call to proceed regardless of the battery level since during charging the wireless communication device 704 has access to an external power supply and so the power level of the battery may not be relevant.

FIG. 7E illustrates a *Send Short Message* command, a *Proactive SIM* command provided by the SIM Toolkit. This command is issued as a response to *Call Control* disallowing the call due to it being an emergency call code and the low battery flag being set on the SIM card 702. In this case, SIM card 702 instructs the wireless device 704 to send an emergency SMS message to an emergency SMS address stored on the SIM card 702. The user will be presented with a menu and wireless carrier-determined input prompts. The input information is then formatted into an SMS message encoded using a standard alphabet such as one of the alphabets specified in the 3 GPP TS 23.038 specification. The *Send Short Message* command is then used to route the SMS message to the emergency SMS address provided by the associate wireless carrier and stored on the SIM card 702.

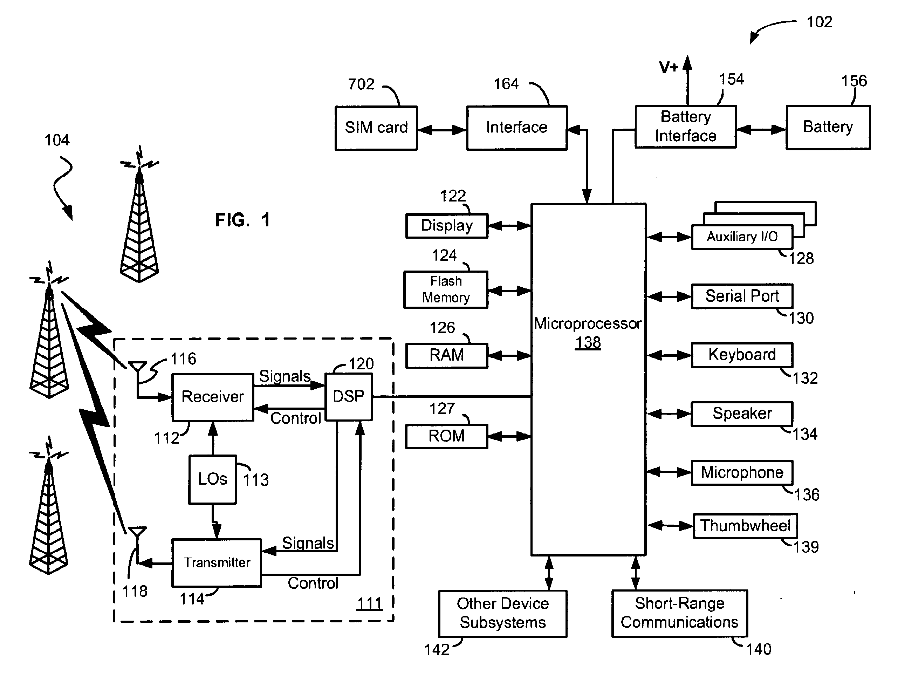

FIG. 1 is a block diagram illustrating a wireless device 102 suitable for processing an emergency call in accordance with one embodiment of the present disclosure. The wireless device 102 communicates through a wireless communication network 104. The wireless network 104 includes antenna, base stations, and supporting radio equipment as for supporting wireless communications between the wireless device 102 and other devices connected to wireless network 104. The wireless network 104 may be coupled to a wireless network gateway (not shown) and to a wide area network (not shown).

The wireless device 102 is preferably a two-way communication device having at least voice and advanced data communication capabilities, including the capability to communicate with other computer systems. Typically, the wireless device 102 is a handheld device. Depending on the functionality provided by the wireless device 102, it may be referred to as a data messaging device, a two-way pager, a cellular telephone with data messaging capabilities, a wireless Internet appliance, or a data communication device (with or without telephony capabilities). The wireless device 102 may communicate with any one of a plurality of fixed transceiver stations within its geographic coverage area.

The wireless device 102 will normally incorporate a communication subsystem 111, which includes a receiver 112, a transmitter 114, and associated components, such as one or more (preferably embedded or internal) antenna elements 116 and 118, local oscillators (LOs) 113, and a processing module such as a digital signal processor (DSP) 120. As will be apparent to those skilled in the field of communications, the particular design of the communication subsystem 111 depends on the wireless network 104 in which wireless device 102 is intended to operate.

The wireless device 102 may send and receive communication signals over the wireless network 104 after the required network registration or activation procedures have been completed. Signals received by the antenna 116 through the wireless network 104 are input to the receiver 112, which may perform such common receiver functions as signal amplification, frequency down conversion, filtering, channel selection, and the like, and analog-to-digital (A/D) conversion. A/D conversion of a received signal allows more complex communication functions such as demodulation and decoding to be performed in the DSP 120. In a similar manner, signals to be transmitted are processed, including modulation and encoding, for example, by DSP 120. These DSP-processed signals are input to the transmitter 114 for digital-to-analog (D/A) conversion, frequency up conversion, filtering, amplification and transmission over the wireless network 104 via the antenna 118. The DSP 120 not only processes communication signals, but also provides for receiver and transmitter control. For example, the gains applied to communication signals in the receiver 112 and the transmitter 114 may be adaptively controlled through automatic gain control algorithms implemented in the DSP 120.

Network access is associated with a subscriber or user of the wireless device 102 via a memory module, such as a SIM card 702, which may be a Subscriber Identity Module card for use in a GSM network or a USIM card for use in a UMTS network adapted in accordance with the method and system of the present disclosure. The SIM card 702 is inserted in or connected to an interface 164 of the wireless device 102 in order to operate in the wireless network 104.

The wireless device 102 also includes a battery interface 154 for receiving one or more rechargeable batteries 156. The battery 156 provides electrical power to most, if not all, electrical circuitry in the wireless device 102, and the battery interface 154 provides a mechanical and electrical connection for it. The battery interface 154 is coupled to a regulator (not shown) which provides power V+ to the circuitry of the wireless device 102.

The wireless device 102 includes a microprocessor 138 which controls the overall operation of the wireless device 102. Communication functions, including at least data and voice communications, are performed through communication subsystem 111. The microprocessor 138 also interacts with additional device subsystems such as a display 122, a flash memory 124, a random access memory (RAM) 126, a read-only access memory (ROM) 127, auxiliary input/output (I/O) subsystems 128, a data port such as serial port 130, a keyboard or keypad 132, a speaker 134, a microphone 136, a clickable thumbwheel or trackwheel 139, a short-range communications subsystem 140, and any other device subsystems generally designated at 142. Some of the subsystems shown in FIG. 1 perform communication-related functions, whereas other subsystems may provide "resident" or on-device functions. Notably, some subsystems, such as keypad 132, display 122, and clickable thumbwheel 139, for example, may be used for both communication-related functions, such as entering a text message for transmission over the wireless network 104, and device-resident functions such as a calculator or task list. Operating system software used by the microprocessor 138 is preferably stored in a persistent store such as flash memory 124, which may alternatively be ROM 127 or similar storage element. Those skilled in the art will appreciate that the operating system, specific device applications, or parts thereof, may be temporarily loaded into a volatile store such as RAM 126.

The microprocessor 138, in addition to its operating system functions, preferably enables execution of software applications on the wireless device 102. A predetermined set of applications which control basic device operations, including at least data and voice communication applications, will normally be installed on the wireless device 102 during its manufacture. The wireless device 102 includes a personal information manager (PIM) application having the ability to organize and manage data items relating to user such as, but not limited to, instant messaging, email, calendar events, voice mails, appointments, and task items. Naturally, one or more memory stores are available on the wireless device 102 and the SIM card 702 to facilitate storage of PIM data items and other information.

The PIM application has the ability to send and receive data items via the wireless network 104. In one embodiment, PIM data items are seamlessly combined, synchronized, and updated via the wireless network 104, with the wireless device user's corresponding data items stored and/or associated with a host computer system thereby creating a mirrored host computer on the wireless device 102 with respect to such items. This is especially advantageous where the host computer system is the wireless device user's office computer system. Additional applications may also be loaded onto the wireless device 102 through the wireless network 104, the auxiliary I/O subsystem 128, the serial port 130, the short-range communications subsystem 140, or any other suitable subsystem 142, and installed by a user in RAM 126 or preferably a non-volatile store (not shown) for execution by the microprocessor 138. Such flexibility in application installation increases the functionality of the wireless device 102 and may provide enhanced on-device functions, communication-related functions, or both. For example, secure communication applications may enable electronic commerce functions and other such financial transactions to be performed using the wireless device 102.

In a data communication mode, a received signal such as a text message, an email message, or Web page download will be processed by the communication subsystem 111 and input to the microprocessor 138. The microprocessor 138 will preferably further process the signal for output to the display 122 or alternatively to the auxiliary I/O device 128. A user of the wireless device 102 may also compose data items, such as email messages, for example, using the keypad 132 and the clickable thumbwheel 139 in conjunction with the display 122 and possibly the auxiliary I/O device 128. The keypad 132 is preferably a complete alphanumeric keypad and/or telephone-type keypad. These composed items may be transmitted over the wireless network 104 through the communication subsystem 111 or the short range communication subsystem 140.

For voice communications, the overall operation of the wireless device 102 is substantially similar, except that the received signals would be output to the speaker 134 and signals for transmission would be generated by the microphone 136. Alternative voice or audio I/O subsystems, such as a voice message recording subsystem, may also be implemented on the wireless device 102. Although voice or audio signal output is preferably accomplished primarily through the speaker 134, the display 122 may also be used to provide an indication of the identity of a calling party, duration of a voice call, or other voice call related information.

The serial port 130 is normally implemented in a personal digital assistant (PDA)-type communication device for which synchronization with a user's desktop computer is a desirable, albeit optional, component. The serial port 130 enables a user to set preferences through an external device or software application and extends the capabilities of the wireless device 102 by providing for information or software downloads to the wireless device 102 other than through the wireless network 104. The alternate download path may, for example, be used to load an encryption key onto the wireless device 102 through a direct and thus reliable and trusted connection to thereby provide secure device communication.

The short-range communications subsystem 140 is an additional optional component which provides for communication between the wireless device 102 and different systems or devices, which need not necessarily be similar devices. For example, the subsystem 140 may include an infrared device and associated circuits and components, or a Bluetooth™ communication module to provide for communication with similarly-enabled systems and devices (Bluetooth™ is a registered trademark of Bluetooth SIG, Inc.).

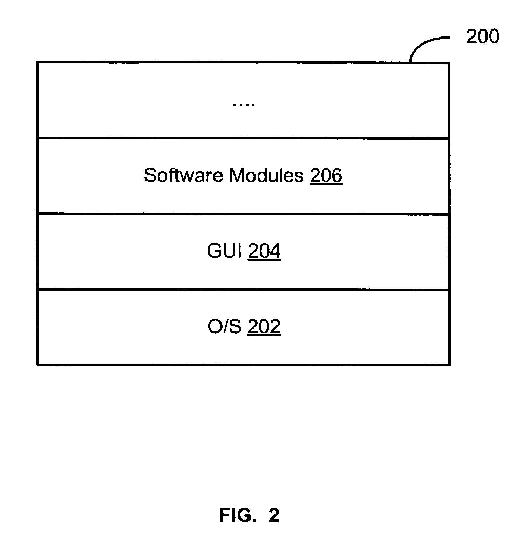

FIG. 2 is a block diagram illustrating a memory 200 of the wireless device 102. The memory 200 has various software components for controlling the wireless device 102 and may include, for example, flash memory 124, RAM 126 and/or ROM 127. In accordance with one embodiment, the wireless device 102 is intended to be a multitasking wireless communications device configured for sending and receiving data items and for making and receiving voice calls. To provide a user-friendly environment to control the operation of the wireless device 102, an operating system 202 resident on the wireless device 102 provides a basic set of operations for supporting various applications typically operable through a graphical user interface (GUI) 204. For example, the operating system 202 provides basic input/output system features to obtain input from the auxiliary I/O 128, keypad 132, clickable thumbwheel 139, and other input devices, and to facilitate output to the user via the display 122. One or more software modules 206 for managing communications or providing a personal digital assistant (PDA) or other functions may also be included. The memory 200 also includes an email and calendar client, which may be combined in, for example, a PIM application having email-based calendaring and scheduling functions.

Thus, the wireless device 102 includes computer executable programmed instructions for directing the wireless device 102 to implement various applications. The programmed instructions may be embodied in one or more software modules 206 resident in the memory 200 of the wireless device 102. Alternatively, the programmed instructions may be embodied on a computer readable medium (such as a DVD, CD, floppy disk or other storage media) which may be used for transporting the programmed instructions to the memory 200 of the wireless device 102. Alternatively, the programmed instructions may be embedded in a computer-readable, signal-bearing medium that is uploaded to the wireless network 104 by a vendor or supplier of the programmed instructions, and this signal-bearing medium may be downloaded through one or more of the interfaces 111, 130, 140 to the wireless device 102 from the wireless network 104 by end users.

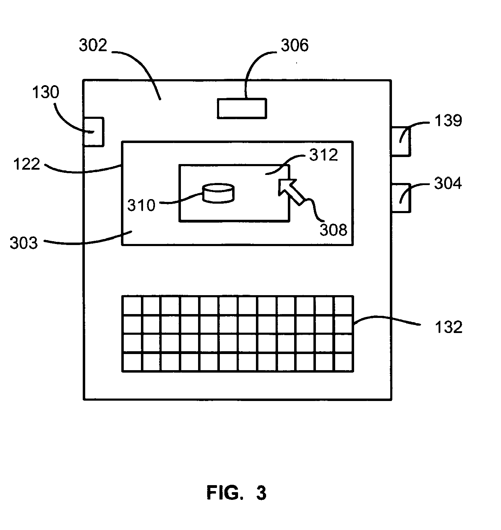

FIG. 3 is a front view of the wireless device 102. As mentioned above, the wireless device 102 may be a data and voice-enabled handheld device. The wireless device 102 includes a casing 302, data or serial port 130, display screen 122, graphical user interface (GUI) 303, keypad 132, clickable thumbwheel 139, one or more input buttons 304 (e.g. select, cancel buttons), and signal inputs/outputs 306 (e.g., power connector input, microphone, speaker, data interface input, etc.). Internally, the wireless device 102 includes one or more circuit boards, a microprocessor 138, a memory 200, a battery 156, an antenna 116, 118, etc., which are coupled to the signal inputs/outputs 306, keypad 132, display screen 122, clickable thumbwheel 139, etc.

The microprocessor 138 is typically coupled to one or more input devices (e.g. buttons 304, keypad 132, clickable thumbwheel 139) for receiving user commands or queries and the display 122 for displaying the results of these commands or queries. For example, user queries may be transformed into a combination of commands for producing one or more tables of output data which may be incorporated in one or more display pages for presentation to the user. The microprocessor 138 is also coupled to the memory 200 containing the software modules 206 and data such as database tables.

A user may interact with the wireless device 102 and its software modules 206 using the GUI 303. The GUI 303 is supported by the operating system 202 and provides a display format enabling the user to choose commands, execute application programs, manage computer files, and perform other functions by selecting pictorial representations known as icons, or selecting items from a menu through the use of an input or pointing device such as a clickable thumbwheel 139 and/or keypad 132. Generally, the GUI 303 is used to convey information and receive commands from users, and generally includes a variety of GUI objects or controls including icons, toolbars, drop-down menus, pop-up menus, text, dialog boxes, buttons, and the like. A user typically interacts with the GUI 303 presented on the display 122 by using the input or pointing device to position a pointer or cursor 308 over an object 310 (i.e., "pointing" at the object) and by "clicking" on the object 310. (e.g., by depressing the thumbwheel 139 or a button on the keyboard 132, etc.). This is often referred to as a point-and-click operation or a selection operation. Typically, the object 310 may be highlighted (e.g., shaded) when it is selected or pointed at by the pointer or cursor 308.

Typically, a GUI-based system presents application, status, and other information to the user in windows appearing on the display 122. A window 312 is a display area within the display 122, typically rectangular, in which a user may view an application or document. A window 312 may be open, closed, displayed full screen, reduced to an icon, increased or reduced in size, or moved to different areas of the display 122. Multiple windows 312 may be displayed simultaneously. For example, windows 312 may be displayed within other windows, overlapped other windows, or tiled within the display area.

While the present disclosure is primarily described as a method, a person of ordinary skill in the art will understand that the present disclosure is also directed to an apparatus for carrying out the disclosed method and including apparatus parts for performing each described method step, be it by way of hardware components, a computer programmed by appropriate software to enable the practice of the disclosed method, by any combination of the two, or in any other manner. Moreover, an article of manufacture for use with the apparatus, such as a pre-recorded storage device or other similar computer readable medium including program instructions recorded thereon, or a computer data signal carrying computer readable program instructions, may direct an apparatus to facilitate the practice of the disclosed method. It is understood that such apparatus, articles of manufacture, and computer data signals also come within the scope of the present disclosure.

Preferably, the low battery event and normal battery monitoring functions are implemented separately from any existing battery monitoring functions of the wireless device such as, for example, for monitoring and displaying low battery messages or the like. However, these functions may be integrated with existing battery monitoring functions if desired. Although the foregoing description at times refers to third generation (3G) networks, this is for purposes of illustration only and is not intended to limit the present disclosure to any particular generation of wireless networks provided such other wireless networks have the technical requirements to implement the features of the method and system of the present disclosure. Further, although the above-described example embodiments are in connection with GSM and UMTS networks, the method and system of the present disclosure may also be adapted for use with Removable User Identity Module (RUIM) cards for use in CDMA2000 (Code Division Multiple Access 2000) networks as would be understood by a person of ordinary skill in the art.

The embodiments of the present disclosure described above are intended to be examples only. Those of skill in the art may effect alterations, modifications and variations to the particular embodiments without departing from the scope of the present disclosure. In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A method for processing an emergency call on a wireless communication device (704), the wireless communication device (704) being operatively connected to a subscriber identity module hereinafter reffered as SIM card (702), and a battery (156) for powering the device (704) and having a display screen (122), the method comprising:
receiving an input from a user of the wireless communication device (704) comprising a number to be called;
determining if the number to be called is an emergency call code;
if the number is an emergency call code, determining if a low battery flag is set on the SIM card (702);
if the low battery flag has not been set on the SIM card (702), allowing the call;
if the low battery flag has been set on the SIM card (702), disallowing the call and sending a short message service hereinafter reffered as SMS message to an emergency SMS address stored on the SIM card (702).

2. The method of claim 1, wherein the step of sending a short message service message to an emergency SMS address comprises: prompting the user for input comprising data for an SMS message; receiving the input from the user; and sending an SMS message comprising the data input by the user to an emergency SMS address stored in the SIM card (702).

3. The method of claim 1 or claim 2, further comprising: determining if the power level of the battery (156) is equal to or less than a predetermined low battery threshold; and if the battery power level is equal to or less than the predetermined low battery threshold, setting a low battery flag on the SIM card (702).

4. The method of claim 1 or claim 2, further comprising: determining if the power level of the battery (156) is equal to or less than a predetermined low battery threshold; and if the battery power level is equal to or less than the predetermined low battery threshold, determining if a low battery flag is set on the SIM card (702), and if the low battery flag is not set, setting the low battery flag on the SIM card (702).

5. The method of any one of claims 1 to 4, further comprising: determining if the battery power level is greater than the predetermined low battery threshold; and if the battery power level is greater than the predetermined low battery threshold, removing a low battery flag on the SIM card (702).

6. The method of any one of claims 1 to 4, further comprising: determining if the battery power level is greater than the predetermined low battery threshold; if the battery power level is greater than the predetermined low battery threshold, determining if a low battery flag is set on the SIM card (702), and if the low battery flag has been set, removing the low battery flag on the SIM card (702).

7. The method of claim 3 or any one of claims 5 or 6 when dependent on claim 3, wherein the predetermined low battery threshold is 5% of the total battery capacity.

8. The method of any one of claims 1 to 7, further comprising, if the number to be called is not an emergency call code, allowing the call.

9. The method of any one of claims 1 to 8, further comprising, if the battery power level is equal to or less than a predetermined low battery threshold, displaying a low battery message on the screen (122) of the wireless communication device (704).

10. The method of any one of claims 1 to 8, further comprising, if the battery power level is greater than a predetermined low battery threshold, displaying a normal battery message on the screen (122) of the wireless communication device (704).

11. A wireless communication device (704) having a display screen (122), input devices for receiving input form a user, and a communication subsystem (111), the wireless communication device comprising:
a subscriber identity module card (702) comprising a memory having stored thereon a low battery flag and an emergency SMS address;
a processor (138) and a memory (200), the memory comprising data and instructions to configure the wireless communication device (704) to perform the method of any one of claims 1 to 10.

12. A subscriber identity module card (702) comprising a memory, the memory having stored thereon at least the following: an emergency SMS address accessible by a wireless communication device (704), a low battery flag accessible by or stored within a SIM application, and a SIM Toolkit or a feature thereof configured to:
set a low battery flag in response to receiving a low battery event notification,
determine if the number to be called is an emergency call code;
if the number is an emergency call code, determine if the low battery flag is set (702);
if the low battery flag has not been set (702), allow the call;
if the low battery flag has been set on the SIM card (702), disallow the call and sending a short message service (SMS) message to the emergency SMS address (702).

13. A subscriber identity module card (702) as claimed in claim 12 further configured to instruct the wireless communication device (704) to issue a low battery event when the battery power level is equal to or less than a predetermined low battery threshold, and instruct the wireless communication device (704) to issue a normal battery event when battery power level is greater than the predetermined low battery threshold.

14. The method of any of claims 1 to 11 or the SIM card (702) of claim 12 or 13, wherein the emergency call code is a local emergency call code or universal emergency call code.

15. A computer program product for processing an emergency call on a wireless communication device (704), the computer program product comprising a computer readable medium embodying program code executable by a processor of the wireless communication device (704) for causing said device to perform the method of any one of claims 1 to 10 or 14.

## Patentansprüche

1. Verfahren zum Verarbeiten eines Notrufs auf einer drahtlosen Kommunikationsvorrichtung (704), wobei die drahtlose Kommunikationsvorrichtung (704) betriebsfähig verbunden ist mit einer Teilnehmeridentitätsmodul-, im Folgenden als SIM (subscriber identity module) bezeichnet,-Karte (702) und einer Batterie (156) zur Energieversorgung der Vorrichtung (704) und einen Anzeigebildschirm (122) aufweist, wobei das Verfahren aufweist:
Empfangen einer Eingabe von einem Benutzer der drahtlosen Kommunikationsvorrichtung (704), die eine anzurufende Nummer aufweist;
Bestimmen, ob die anzurufende Nummer ein Notrufcode ist;
wenn die Nummer ein Notrufcode ist, Bestimmen, ob ein "schwache Batterie"-Flag auf der SIM-Karte (702) gesetzt ist;
wenn das "schwache Batterie"-Flag auf der SIM-Karte (702) nicht gesetzt wurde, Ermöglichen des Anrufs;
wenn das "schwache Batterie"-Flag auf der SIM-Karte (702) gesetzt wurde, kein Ermöglichen des Anrufs und Senden einer Kurznachricht, im Folgenden als SMS(short message service)-Nachricht bezeichnet, an eine Notfall-SMS-Adresse, die auf der SIM-Karte (702) gespeichert ist.

2. Verfahren gemäß Anspruch 1, wobei der Schritt des Sendens einer Kurznachricht an eine Notfall-SMS-Adresse aufweist: Auffordern des Benutzers für eine Eingabe, die Daten für eine SMS-Nachricht aufweist; Empfangen der Eingabe von dem Benutzer; und Senden einer SMS-Nachricht, die die von dem Benutzer eingegebenen Daten aufweist, an eine Notfall-SMS-Adresse, die in der SIM-Karte (702) gespeichert ist.

3. Verfahren gemäß Anspruch 1 oder Anspruch 2, das weiter aufweist:
Bestimmen, ob der Leistungspegel der Batterie (156) gleich oder geringer ist als eine vorgegebene "schwache Batterie"-Schwelle; und wenn der Batterieleistungspegel gleich oder geringer ist als die vorgegebene "schwache Batterie"-Schwelle, Setzen eines "schwache Batterie"-Flags auf der SIM-Karte (702).

4. Verfahren gemäß Anspruch 1 oder Anspruch 2, das weiter aufweist:
Bestimmen, ob der Leistungspegel der Batterie (156) gleich oder geringer ist als eine vorgegebene "schwache Batterie"-Schwelle; und wenn der Batterieleistungspegel gleich oder geringer ist als die vorgegebene "schwache Batterie"-Schwelle, Bestimmen, ob ein "schwache Batterie"-Flag auf der SIM-Karte (702) gesetzt ist, und wenn das "schwache Batterie"-Flag nicht gesetzt ist, Setzen des "schwache Batterie"-Flags auf der SIM-Karte (702).

5. Verfahren gemäß einem der Ansprüche 1 bis 4, das weiter aufweist:
Bestimmen, ob der Batterieleistungspegel größer ist als die vorgegebene "schwache Batterie"-Schwelle; und wenn der Batterieleistungspegel größer ist als die vorgegebene "schwache Batterie"-Schwelle, Entfernen eines "schwache Batterie"-Flags auf der SIM-Karte (702).

6. Verfahren gemäß einem der Ansprüche 1 bis 4, das weiter aufweist:
Bestimmen, ob der Batterieleistungspegel größer ist als die vorgegebene "schwache Batterie"-Schwelle; und wenn der Batterieleistungspegel größer ist als die vorgegebene "schwache Batterie"-Schwelle, Bestimmen, ob ein "schwache Batterie"-Flag auf der SIM-Karte (702) gesetzt ist, und wenn das "schwache Batterie"-Flag gesetzt wurde, Entfernen des "schwache Batterie"-Flags auf der SIM-Karte (702).

7. Verfahren gemäß Anspruch 3 oder einem der Ansprüche 5 oder 6, wenn abhängig von Anspruch 3, wobei die vorgegebene "schwache Batterie"-Schwelle 5% der gesamten Batteriekapazität beträgt.

8. Verfahren gemäß einem der Ansprüche 1 bis 7, das weiter aufweist, wenn die anzurufende Nummer kein Notrufcode ist, Ermöglichen des Anrufs.

9. Verfahren gemäß einem der Ansprüche 1 bis 8, das weiter aufweist, wenn der Batterieleistungspegel gleich oder geringer ist als eine vorgegebene "schwache Batterie"-Schwelle, Anzeigen einer "schwache Batterie"-Nachricht auf dem Bildschirm (122) der drahtlosen Kommunikationsvorrichtung (704).

10. Verfahren gemäß einem der Ansprüche 1 bis 8, das weiter aufweist, wenn der Batterieleistungspegel größer ist als eine vorgegebene "schwache Batterie"-Schwelle, Anzeigen einer "normale Batterie"-Nachricht auf dem Bildschirm (122) der drahtlosen Kommunikationsvorrichtung (704).

11. Drahtlose Kommunikationsvorrichtung (704) mit einem Anzeigebildschirm (122), Eingabevorrichtungen zum Empfangen einer Eingabe von einem Benutzer und einem Kommunikationsteilsystem (111), wobei die drahtlose Kommunikationsvorrichtung aufweist:
eine SIM(subscriber identity module)-Karte (702), die einen Speicher aufweist mit einem "schwache Batterie"-Flag und einer Notfall-SMS-Adresse darauf gespeichert;
einen Prozessor (138) und einen Speicher (200), wobei der Speicher Daten und Anweisungen aufweist, um die drahtlose Kommunikationsvorrichtung (704) zu konfigurieren, das Verfahren gemäß einem der Ansprüche 1 bis 10 durchzuführen.

12. Teilnehmeridentitätsmodul-Karte (702), die einen Speicher aufweist, wobei der Speicher darauf zumindest Folgendes gespeichert hat: eine Notfall-SMS-Adresse, auf die eine drahtlose Kommunikationsvorrichtung (704) zugreifen kann, ein "schwache Batterie"-Flag, auf das eine SIM-Anwendung zugreifen kann oder in dieser gespeichert ist, und ein SIM-Toolkit oder ein Merkmal davon, konfiguriert zum:
Setzen eines "schwache Batterie"-Flags in Reaktion auf ein Empfangen einer "schwache Batterie"-Ereignisbenachrichtigung, Bestimmen, ob die anzurufende Nummer ein Notrufcode ist;
wenn die Nummer ein Notrufcode ist, Bestimmen, ob das "schwache Batterie"-Flag gesetzt ist (702);
wenn das "schwache Batterie"-Flag nicht gesetzt wurde (702), Ermöglichen des Anrufs;
wenn das "schwache Batterie"-Flag auf der SIM-Karte (702) gesetzt wurde, kein Ermöglichen des Anrufs und Senden einer SMS(short message service)-Nachricht an die Notfall-SMS-Adresse (702).

13. Teilnehmeridentitätsmodul-Karte (702) gemäß Anspruch 12, die weiter konfiguriert ist, die drahtlose Kommunikationsvorrichtung (704) anzuweisen, ein "schwache Batterie"-Ereignis auszugeben, wenn der Batterieleistungspegel gleich oder geringer ist als eine vorgegebene "schwache Batterie"-Schwelle, und die drahtlose Kommunikationsvorrichtung (704) anzuweisen, ein "normale Batterie"-Ereignis auszugeben, wenn der Batterieleistungspegel größer ist als die vorgegebene "schwache Batterie"-Schwelle.

14. Verfahren gemäß einem der Ansprüche 1 bis 11 oder die SIM-Karte (702) gemäß Anspruch 12 oder 13, wobei der Notrufcode ein lokaler Notrufcode oder ein universeller Notrufcode ist.

15. Computerprogrammprodukt zum Verarbeiten eines Notrufs auf einer drahtlosen Kommunikationsvorrichtung (704), wobei das Computerprogrammprodukt ein Computer-lesbares Medium aufweist mit Programmcode, der durch einen Prozessor der drahtlosen Kommunikationsvorrichtung (704) ausführbar ist, um die Vorrichtung zu veranlassen, das Verfahren gemäß einem der Ansprüche 1 bis 10 oder 14 durchzuführen.

## Revendications

1. Procédé de traitement d'un appel d'urgence sur un dispositif de communication sans fil (704), le dispositif de communication sans fil (704) étant connecté en service à une carte de module d'identité d'abonné, ci-après SIM pour « *Subscriber Identity Module* », (702) et à une batterie (156) destinée à alimenter le dispositif (704) et possédant un écran d'affichage (122), le procédé comprenant les étapes consistant à :
recevoir d'un utilisateur du dispositif de communication sans fil (704) une entrée comprenant un numéro à appeler ;
déterminer si le numéro à appeler est un code d'appel d'urgence ;
si le numéro est un code d'appel d'urgence, déterminer si un drapeau de batterie faible est armé sur la carte SIM (702) ;
si le drapeau de batterie faible n'a pas été armé sur la carte SIM (702), autoriser l'appel ;
si le drapeau de batterie faible a été armé sur la carte SIM (702), interdire l'appel et envoyer un message du service de messages courts, ci-après SMS pour « *Short Message Service »,* à une adresse SMS d'urgence stockée sur la carte SIM (702).

2. Procédé selon la revendication 1, dans lequel l'étape d'envoi d'un message du service de messages courts à une adresse SMS d'urgence comprend les étapes consistant à :
demander à l'utilisateur une entrée comprenant des données pour un message SMS ;
recevoir l'entrée de l'utilisateur ; et
envoyer à une adresse SMS d'urgence stockée dans la carte SIM (702) un message SMS comprenant les données saisies par l'utilisateur.

3. Procédé selon la revendication 1 ou la revendication 2, comprenant en outre les étapes consistant à :
déterminer si le niveau d'énergie de la batterie (156) est égal ou inférieur à un seuil prédéterminé de batterie faible ; et
si le niveau d'énergie de la batterie est égal ou inférieur au seuil prédéterminé de batterie faible, armer un drapeau de batterie faible sur la carte SIM (702).

4. Procédé selon la revendication 1 ou la revendication 2, comprenant en outre les étapes consistant à :
déterminer si le niveau d'énergie de la batterie (156) est égal ou inférieur à un seuil prédéterminé de batterie faible ; et
si le niveau d'énergie de la batterie est égal ou inférieur au seuil prédéterminé de batterie faible, déterminer si un drapeau de batterie faible est armé sur la carte SIM (702) et, si le drapeau de batterie faible n'est pas armé, armer le drapeau de batterie faible sur la carte SIM (702).

5. Procédé selon l'une quelconque des revendications 1 à 4, comprenant en outre les étapes consistant à :
déterminer si le niveau d'énergie de la batterie est supérieur au seuil prédéterminé de batterie faible ; et
si le niveau d'énergie de la batterie est supérieur au seuil prédéterminé de batterie faible, supprimer le drapeau de batterie faible sur la carte SIM (702).

6. Procédé selon l'une quelconque des revendications 1 à 4, comprenant en outre les étapes consistant à :
déterminer si le niveau d'énergie de la batterie est supérieur au seuil prédéterminé de batterie faible ; et
si le niveau d'énergie de la batterie est supérieur au seuil prédéterminé de batterie faible, déterminer si un drapeau de batterie faible est armé sur la carte SIM (702) et, si le drapeau de batterie faible a été armé, supprimer le drapeau de batterie faible sur la carte SIM (702).

7. Procédé selon la revendication 3 ou selon l'une quelconque des revendications 5 et 6 lorsqu'elles dépendent de la revendication 3, dans lequel le seuil prédéterminé de batterie faible est de 5 % de la capacité totale de la batterie.

8. Procédé selon l'une quelconque des revendications 1 à 7, comprenant en outre l'étape consistant à autoriser l'appel si le numéro à appeler n'est pas un code d'appel d'urgence.

9. Procédé selon l'une quelconque des revendications 1 à 8, comprenant en outre l'étape consistant à afficher un message de batterie faible sur l'écran (122) du dispositif de communication sans fil (704) si le niveau d'énergie de la batterie est égal ou inférieur à un seuil prédéterminé de batterie faible.

10. Procédé selon l'une quelconque des revendications 1 à 8, comprenant en outre l'étape consistant à afficher un message de batterie normale sur l'écran (122) du dispositif de communication sans fil (704) si le niveau d'énergie de la batterie est supérieur à un seuil prédéterminé de batterie faible.

11. Dispositif de communication sans fil (704) possédant un écran d'affichage (122), des dispositifs d'entrée destinés à recevoir une entrée d'un utilisateur et un sous-système de communication (111), le dispositif de communication sans fil comprenant :
une carte de module d'identité d'abonné (702) comprenant une mémoire dans laquelle sont stockés un drapeau de batterie faible et une adresse SMS d'urgence ;
un processeur (138) et une mémoire (200), la mémoire comprenant des données et des instructions pour configurer le dispositif de communication sans fil (704) afin d'exécuter le procédé selon l'une quelconque des revendications 1 à 10.

12. Carte de module d'identité d'abonné (702) comprenant une mémoire, mémoire dans laquelle sont stockés au moins les éléments suivants : une adresse SMS d'urgence accessible par un dispositif de communication sans fil (704), un drapeau de batterie faible accessible par une application SIM ou stocké en son sein et un environnement de développement SIM, ou une fonctionnalité de celui-ci, configuré pour :
armer un drapeau de batterie faible en réponse à la réception d'une notification d'événement de batterie faible ;
déterminer si le numéro à appeler est un code d'appel d'urgence ;
si le numéro est un code d'appel d'urgence, déterminer si un drapeau de batterie faible est armé (702) ;
si le drapeau de batterie faible n'a pas été armé (702), autoriser l'appel ;
si le drapeau de batterie faible a été armé sur la carte SIM (702), interdire l'appel et envoyer un message du service de messages courts, (SMS) à l'adresse SMS d'urgence (702).

13. Carte de module d'identité d'abonné (702) selon la revendication 12, configurée en outre pour ordonner au dispositif de communication sans fil (704) d'émettre un événement de batterie faible lorsque le niveau d'énergie de la batterie est égal ou inférieur à un seuil prédéterminé de batterie faible et pour ordonner au dispositif de communication sans fil (704) d'émettre un événement de batterie normale lorsque le niveau d'énergie de la batterie est supérieur au seuil prédéterminé de batterie faible.

14. Procédé selon l'une quelconque des revendications 1 à 11 ou carte SIM (702) selon la revendication 12 ou 13, dans lequel le code d'appel d'urgence est un code local d'appel d'urgence ou un code universel d'appel d'urgence.

15. Progiciel d'ordinateur destiné à traiter un appel d'urgence sur un dispositif de communication sans fil (704), le progiciel d'ordinateur comprenant un support lisible par ordinateur matérialisant du code de programme pouvant être exécuté par un processeur du dispositif de communication sans fil (704) afin de commander audit dispositif d'exécuter le procédé selon l'une quelconque des revendications 1 à 10 ou 14.
